Europäisches Patentamt

European Patent Office

Office européen des brevets

(19)

(11) Numéro de publication: **0 205 360**
**B1**

# (12) FASCICULE DE BREVET EUROPEEN

(45) Date de publication du fascicule du brevet:
03.01.90

(21) Numéro de dépôt: 86400920.4

(22) Date de dépôt: 25.04.86

(51) Int. Cl.⁴: **H01G 1/14**, H01G 13/00

(54) **Bande de connexion pour la fabrication de composants électriques à report direct et procédé de fabrication de ces composants.**

(30) Priorité: 10.05.85 FR 8507148

(43) Date de publication de la demande:
17.12.86 Bulletin 86/51

(45) Mention de la délivrance du brevet:
03.01.90 Bulletin 90/1

(84) Etats contractants désignés:
BE DE IT

(56) Documents cités:
EP-A- 0 130 001
EP-A- 0 162 149
US-A- 4 578 736

(73) Titulaire: **L.C.C.-C.I.C.E. - COMPAGNIE EUROPEENNE DE COMPOSANTS ELECTRONIQUES, 50, rue Jean-Pierre Timbaud B.P. 301, F-92402 Courbevoie(FR)**

(72) Inventeur: **Bernard, Gilles, THOMSON-CSF SCPI 19, avenue de Messine, F-75008 Paris(FR)**
Inventeur: **Delalande, François, THOMSON-CSF SCPI 19, avenue de Messine, F-75008 Paris(FR)**

(74) Mandataire: **Ruellan-Lemonnier, Brigitte et al, THOMSON-CSF SCPI, F-92045 PARIS LA DEFENSE CEDEX 67(FR)**

## Description

La présente invention concerne une bande de connexion intervenant dans la fabrication de composants électriques destinés à être utilisés par report à plat à la vague.

Le document EP-A 162 149 publié le 27.11.85 ayant une date de priorité du 3.4.84 concerne une bande de connexion pour un tel composant électrique dans laquelle au moins l'une des pattes de fixation possède un bossage.

Ces composants électriques sont surtout représentés par des condensateurs parallélépipédiques mieux connus sous l'appellation anglo-saxonne de condensateurs chips. Ils comportent des connexions métallisées situées sur deux faces opposées du parallélépipède et qui sont directement reportées sur les circuits imprimés par collage puis passage dans une vague de soudure à environ 260°C durant quelques secondes.

La réalisation de condensateurs chips à partir de film diélectrique métallisé pose un certain nombre de problèmes. Il est connu, par exemple du brevet FR 2 011 553, de réaliser des condensateurs parallélépipédiques du type empilé à partir de diélectriques plastiques métallisés. Après bobinage sur une roue de grand diamètre de manière à former des condensateurs-mères superposés, puis shoopage des faces latérales desdits condensateurs-mères, ceux-ci sont découpés en condensateurs individuels, perpendiculairement aux shoophages latéraux. De tels condensateurs, bien qu'ayant la forme requise, ne sont pas en pratique utilisables en tant que condensateurs chips soudables selon le procédé mentionné plus haut. En effet, on constate que de tels condensateurs, en polyester métallisé par exemple, sont dégradés par suite des déformations mécaniques dues au retrait des films utilisés, entre les deux faces non shoopées du parallélépipède correspondant aux faces de sciage du condensateur-mère.

La demande de brevet français FR 2 555 356 déposée le 18 novembre 1983 a apporté une première solution pour atténuer ces dégradations. Selon cette demande de brevet, les connexions du condensateur sont définies par des contacts électriques constitués par des profilés en forme de U comprenant des zones d'étranglement de manière à diminuer la conduction thermique au niveau de doigts de contact tout en assurant une conduction électrique satisfaisante. En effet, l'utilisation de doigts de contact, entre chaque shoopage latéral du parallélépipède et la connexion électrique extérieure du condensateur terminé réduit la conduction thermique entre le condensateur lui-même et la connexion électrique extérieure. De cette manière, au cours de l'étape de soudure à la vague, la transmission de chaleur est suffisamment faible pour n'entraîner aucune dégradation du condensateur lui-même.

Le procédé de fabrication de ce condensateur fait intervenir deux profilés en forme de U possédant des doigts de contact qui sont soudés sur les shoopages, l'espace entre les profilés est ensuite rempli de résine et l'ensemble est découpé pour former des condensateurs individuels.

L'inconvénient de ce procédé consiste surtout en l'utilisation de deux profilés qui doivent être disposés rigoureusement parallèles entre eux, au positionnement des éléments électriques par rapport à ces profilés. L'opération d'enrobage des éléments est également assez délicate à réaliser.

La demande de brevet EP-A 0 130 001 décrit une bande de connexion pour la fabrication d'un composant électrique à report direct. La bande est obtenue à partir d'une feuille métallique. Le composant est constitué d'un élément passif possédant deux terminaisons électriques. L'ensemble est noyé dans un enrobage protecteur. Le composant comprend deux connexions électriques, chacune des connexions comporte une partie située en surface de l'enrobage pour former l'une des électrodes du composant et une partie assurant la liaison électrique avec la terminaison correspondante. Des découpes sont effectuées dans la feuille pour réaliser les connexions électriques. Deux pattes de fixation sont destinées à être repliées sur les terminaisons électriques pour maintenir en position l'élément et assurer la liaison électrique. Les électrodes du composant sont formées par découpe et pliage.

Afin de pallier ces inconvénients, l'invention propose une bande de connexion servant pendant tout le cycle de fabrication: d'abord comme support des éléments qui sont soudés sur des pattes solidaires de la bande. La bande sert ensuite de plan de joint pour le moulage de la résine d'enrobage. Une découpe de la bande permet ensuite de réaliser les connexions électriques du composant. L'étanchéité réalisée par la bande lors du moulage permet d'éviter tout risque de salissure sur les connexions définitives du condensateur. De par sa conception générale, cette bande permet un positionnement facile et précis des pièces et un accostage fiable donc un plus grande fiabilité et une meilleure qualité pour la soudure des composants sur les pattes.

L'invention a donc pour objet une bande de connexion pour la fabrication d'au moins un composant électrique à report direct et obtenue à partir d'une feuille métallique, le composant devant être constitué d'un élément passif ou actif possédant deux terminaisons électriques, l'ensemble étant noyé dans un enrobage protecteur, le composant devant comprendre également deux connexions électriques, chacune des connexions comportant une partie située en surface de l'enrobage pour former l'une des électrodes du composant et une partie assurant la liaison électrique avec la terminaison correspondante. Deux séries de découpes sont effectuées dans ladite feuille pour réaliser les connexions électriques, soit:

– une première série de découpes fournissant au moins deux pattes de fixation destinées à être repliées sur les terminaisons électriques pour maintenir en position ledit élément et assurer la liaison électrique,

– une seconde série de découpes pour former les électrodes du composant après découpe finale et pliage.

La bande de connexion possède un bossage à au moins l'une des pattes de fixation dont le sommet assure la liaison avec la terminaison électrique correspondante.

Les pattes de fixation peuvent être avantageusement obtenues par une découpe en forme de H.

Afin d'assurer une protection thermique efficace de l'élément, il est préférable qu'au moins l'une des pattes de fixation possède un bossage dont le sommet assure la liaison avec la terminaison électrique correspondante.

Pour ne pas endommager l'élément actif ou passif lors de la soudure à la vague du composant obtenu, il est avantageux de réaliser une résistance thermique entre les terminaisons électriques de l'élément et les électrodes du composant. Ceci sera obtenu en réduisant la section d'au moins l'une des pattes de fixation.

Pour faciliter l'automatisation du procédé, la bande de connexion sera équipée de moyens permettant son entraînement. Ces moyens peuvent être des trous percés sur les bords latéraux de la bande et destinés à recevoir les dents d'un dispositif d'entraînement. L'invention a encore pour objet un procédé de fabrication d'un tel composant électrique au moyen de la bande de connexion définie ci-dessus. Ce procédé est caractérisé en ce qu'il comporte au moins les étapes suivantes:

a) Pliage des pattes de fixation de façon à recevoir ledit élément,

b) Mise en place des éléments, les pattes de fixation retenant les éléments tout en assurant le contact électrique avec les terminaisons correspondantes,

d) Enrobage des éléments, la bande de connexion servant de plan de joint pour le moulage,

e) Découpe de la bande de connexion pour délimiter chaque composant électrique et les parties destinées à former ses électrodes,

f) Pliage et sertissage sur le composant des parties délimitées à l'étape précédente.

Il est avantageux que des parties des électrodes ainsi constituées forment des clips de sertissage sur la masse de l'enrobage.

L'invention sera mieux comprise et d'autres avantages apparaîtront au moyen des figures annexées parmi lesquelles:

- la figure 1 représente un élément capacitif empilé,

- la figure 2 est une vue de dessus d'une bande de connexion,

- la figure 3 est une vue de détail représentant le montage de l'élément entre les pattes de fixation,

- les figures 4, 5 et 6 représentent différentes sections possibles pour les pattes de fixation,

- les figures 7 et 8 sont respectivement des vues de dessus et de dessous de la bande de connexion après enrobage des éléments,

- la figure 9 est également une vue de dessous mais agrandie de la bande de connexion,

- les figures 10 et 11 décrivent les opérations de pliage et de sertissage des électrodes,

- la figure 12 est une vue du composant électrique obtenu en fin de procédé,

- les figures 13 et 14 sont des variantes de bandes de connexions selon l'invention.

Dans la partie de la description qui va suivre, ou va décrire la fabrication de condensateurs chips pour report à plat à la vague mais il entre également dans le cadre de l'invention de fabriquer sous cette forme d'autres éléments passifs ou même des éléments actifs.

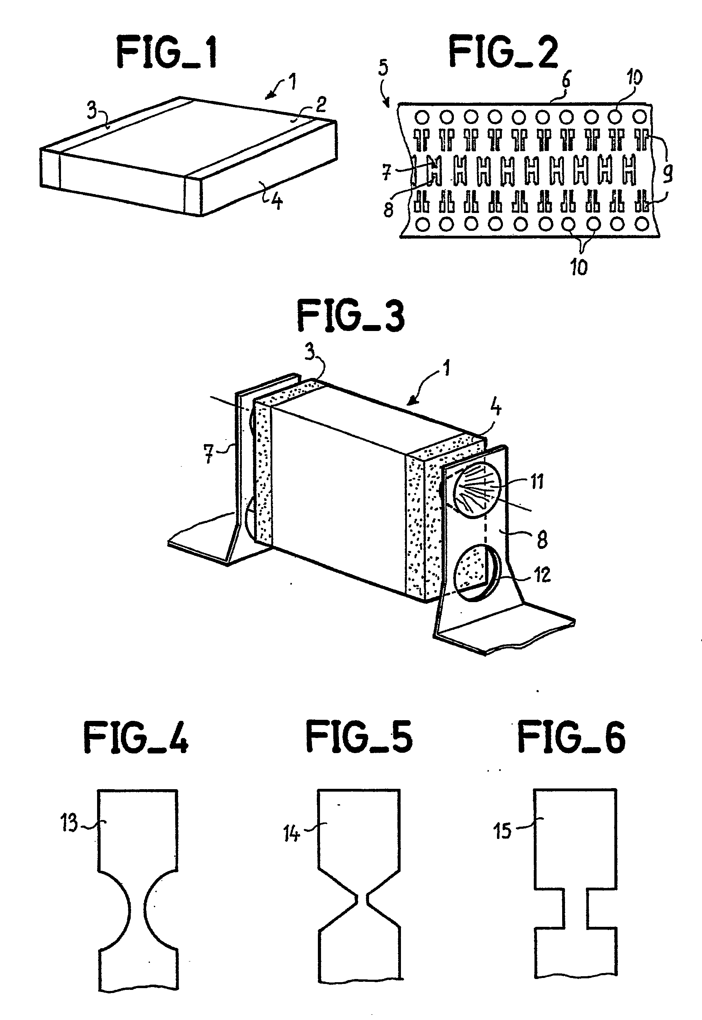

La figure 1 représente un élément électronique destiné à être conditionné sous forme de composant à report direct. L'élément 1 est par exemple un condensateur obtenu par un empilement 2 de films métallisés. De façon classique les terminaisons électriques 3 et 4 de l'élément 1 sont constituées par "shoopage" de deux faces opposées du parallélépipède constituant l'élément.

La figure 2 est une vue de dessus d'une bande de connexion 5 permettant le conditionnement de l'élément 1. La bande 5 est constituée d'une feuille souple 6 métallique en matériau de faible conductibilité thermique (acier, bronze etc.). Le métal de la feuille doit pouvoir être soudé sur les "shoopages" 3 et 4. Le matériau de ces terminaisons est généralement de l'aluminium utilisé seul ou des couches successives d'aluminium et d'un alliage étain-plomb. Le métal de la feuille sera choisi en conséquence. Sur cette feuille on a procédé à plusieurs sortes de découpes. D'abord, selon l'axe longitudinal de la feuille, des découpes en forme de H ont été réalisées pour disposer de deux languettes métalliques 7 et 8 qui serviront de pattes de fixation. Il est préférable que la découpe soit effectuée de sorte que le rattachement des languettes au reste de la feuille s'effectue selon des surfaces évasées comme représenté à la figure 2. Ceci facilitera leur pliage et donnera une meilleure élasticité aux pattes de fixation pour maintenir l'élément 1. D'autres découpes sont effectuées qui détermineront les électrodes des futurs composants. Ce sont les découpes en forme de L telles que représentées sur la figure 2 sous la référence 9.

A chaque découpe en H correspondent quatre découpes en L qui l'encadrent. Chaque bord latéral de la feuille est percé de trous 10 qui serviront à son entraînement par un dispositif approprié dans le cadre d'une fabrication automatisée.

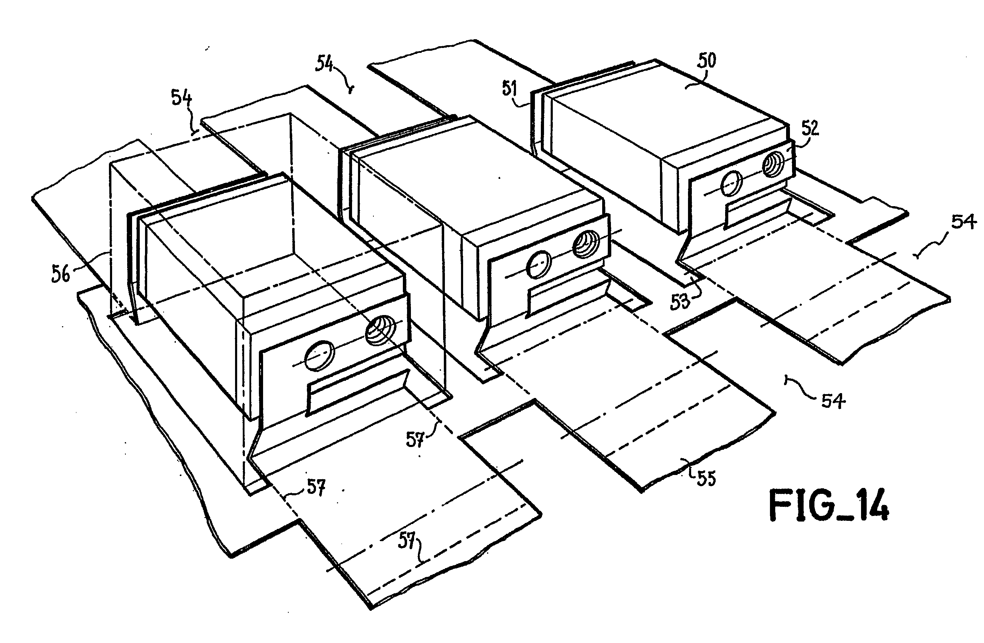

Les languettes 7 et 8 seront redressées verticalement pour former des pattes de fixation. Entre ces pattes de fixation on déposera un condensateur 1, les pattes de fixation étant en contact avec les "shoopages". La figure 3 est une vue de détail représentant une telle disposition. Sur cette figure, l'élément 1 est placé debout mais il pourrait être mis à plat. Il est maintenu en position par les pattes 7 et 8. Il est avantageux de procéder à certains aménagements des pattes de fixation pour les raisons suivantes. Pour assurer un bon maintien de l'élément 1 et pour faciliter sa soudure les pattes 7 et 8 seront munies de bossages 11 dont les sommets assureront le contact électrique et le maintien mécanique avec l'élément 1. Pour permettre à l'élément 1 de garder ses propriétés, il faut qu'il puisse supporter sans dommage les contraintes thermiques du report à plat. Une réduction de section des pattes de fixation permet de créer une résistance thermique entre les terminaisons de l'élément 1 et ses électrodes. Ainsi, dans le cas d'un élément capacitif, il sera possible de ne pas dépasser 0,2% de variation de la capacité après la soudure à la vague du composant (environ 265° C pendant 10 secondes). La restriction de section est réalisée sur une longueur faible afin de ne pas trop augmenter la résistance série de la connexion et par conséquent les pertes du condensateur. La section restreinte peut être obtenue par des trous 12 percés dans les pattes de fixation. D'autres formes peuvent être envisagées comme le montrent les pattes de fixation 13 de la figure 4, 14 de la figure 5 et 15 de la figure 6.

La liaison permanente des pattes sur l'élément peut être obtenue par soudure.

Une fois les soudures réalisées, on procédera à l'enrobage des éléments. La bande de connexion servira avantageusement de plan de joint pour le moulage. L'enrobage des éléments peut être réalisé selon diverses techniques connues. On peut procéder par exemple à un moulage par injection liquide d'une résine auto-extinguible, à un moulage par transfert poudre, par coulée, etc. Un type de résine utilisable est celle portant la référence 0451 Bakelite qui a l'avantage d'assurer une bonne protection thermique de composant lors de la soudure à la vague. Comme autres ingrédients, on peut citer le durcisseur MTHPA et l'accélérateur BDMA. La résine peut être également : non chargée à faible conductibilité thermique, chargée (billes de verre creuses, poudre de mica, etc.) ou alvéolée sous forme de mousse.

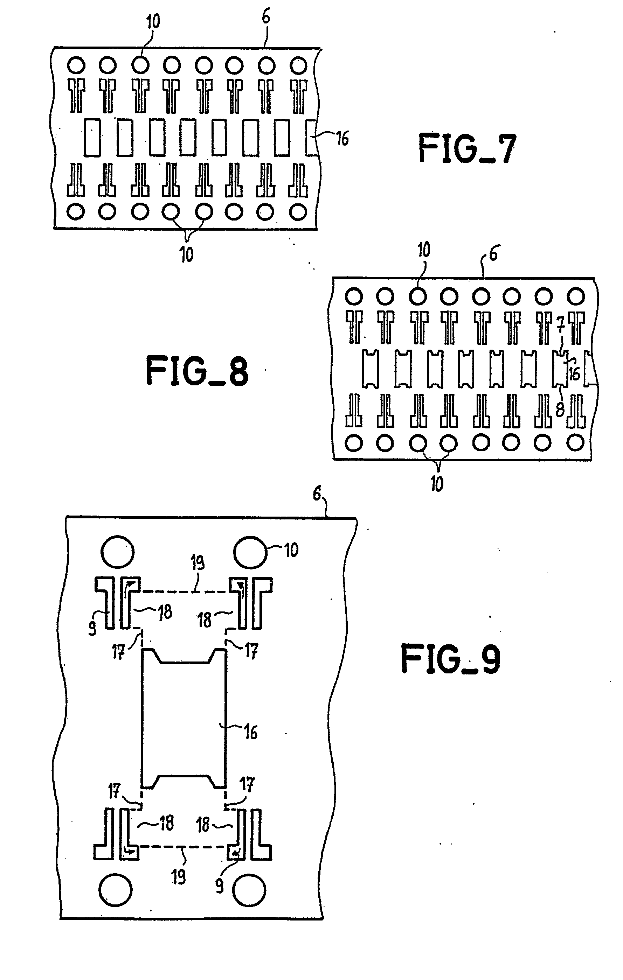

Les figures 7 et 8 sont respectivement des vues de dessus et de dessous de la bande de conduction après enrobage des éléments. Ces figures ont l'avantage de montrer l'encombrement de l'élément enrobé 16 par rapport au reste de la feuille 6. Grâce à la figure 8, on remarque comment les pattes 7 et 8 sortent de l'enrobage.

Les éléments enrobés, présentés sur une bande continue ou discontinue, sont prêts pour les dernières étapes du procédé de fabrication découpe : et pliage des électrodes.

D'abord on réalise les clips qui serviront au maintien des électrodes sur leurs futurs emplacements. Pour cela on procède à une découpe suivant les pointillés référencés 17 sur la figure 9 et on rabat à angle droit les parties 18 comme indiqué par les flèches. A noter qu'il est possible de prévoir les découpes 17 initialement. On procède ensuite à la découpe individuelle de chaque condensateur. Cette découpe peut être réalisée suivant les pointillés 19 comme indiqué sur la figure 9.

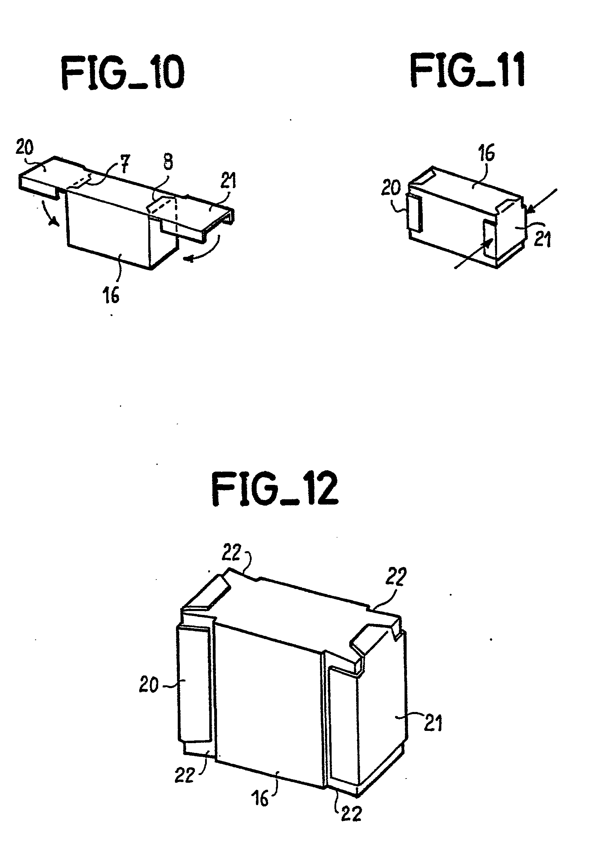

La figure 10 représente le composant obtenu après séparation d'avec la feuille 6. La forme des électrodes 20 et 21 est consécutive des découpes 9, 17 et 19 et de la précédente opération de pliage. Les électrodes 20 et 21 sont alors repliées à angle droit dans le direction indiquée par les flèches. Elles sont ensuite serties sur l'enrobage du composant comme le montre la figure 11 pour l'électrode 21.

On peut prévoir, lors du moulage, des logements de réception dans la résine pour les parties serties afin de favoriser la tenue mécanique des connexions. La figure 12 représente le composant obtenu en fin d'opération. On peut remarquer les logements 22 prévus pour le sertissage.

Le marquage des composants peut être réaliser de façon classique ou par inscription laser. Le composant peut être conditionné en vrac ou sur bande.

D'autres formes de découpes peuvent bien sûr être envisagées. Les éléments passifs ou actifs peuvent être disposés à plat ou de champ. Les pattes de fixation peuvent être disposées parallèlement aux électrodes ou à 90° par rapport à celles-ci. On peut également prévoir des pliages de façon à poser l'élément de façon plus stable avant soudure.

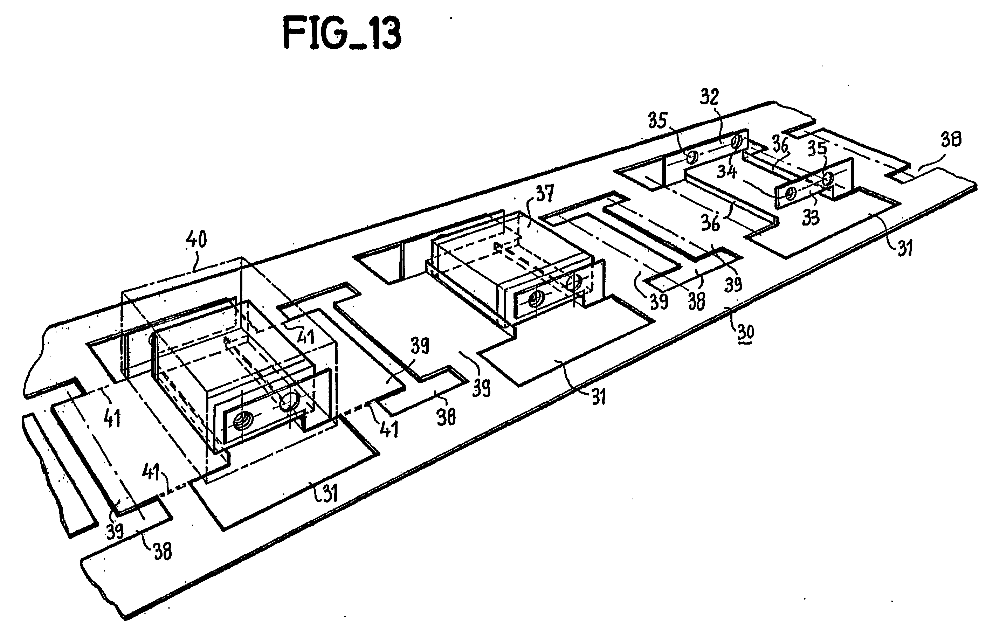

La figure 13 représente un autre configuration possible pour la bande de connexion. Pour faciliter la compréhension, on a représenté sur la même figure plusieurs étapes du procédé. La feuille 30 possède des premières découpes 31 destinées à former après pliage les pattes de fixation 32 et 33. Comme précédemment, ces pattes peuvent comporter des bossages 34 et des trous 35. On remarque également deux autres pliures 36 qui serviront au positionnement de l'élément 37 posé à plat.

La feuille 30 possède également de secondes découpes 38 alternant avec les premières. Les parties 39 situées entre les premières et secondes découpes formeront après une nouvelle coupe de la feuille et après pliage les électrodes des composants. On a représenté en traits interrompus 40 les limites de l'enrobage. Après une coupe suivant les pointillés 41, les électrodes du composant se trouvent délimitées.

La figure 14 représente encore une autre configuration pour laquelle les électrodes du composant sont repliées dans des plans parallèles aux pattes de fixation. L'élément 50 est maintenu par les pattes de fixation 51 et 52 obtenues après avoir procédé à la découpe 53 et au pliage des pattes. Ces découpes 53 sont encadrées par d'autres découpes 54 effectuées dans la bande de connexion 55 qui n'a pas été représentée dans toute sa largeur. Comme précédemment, le trait discontinu 56 représente les limites de l'enrobage. Les traits pointillés 57 représentent les découpes qui interviendront ensuite.

Comme il a été dit, ce procédé s'applique particulièrement bien à la fabrication de condensateurs chips pour report à plat à la vague. Les éléments capacitifs étant disposés dans une bande ou grille de connexion à un pas déterminé, les fonctions suivantes peuvent être assurées:
- transport des éléments pour la fabrication industrielle fiable et sûre,
- étanchéité pour le moulage (époxy, poudre ou liquide),
- connexions extérieures et liaison avec l'élément capacitif,
- protection des électrodes contre tout risque de souillure au moulage,
- facilité de mesure pour les contrôles de fabrication,
- facilité de conditionnement,
- protection thermique au niveau de la liaison électrique et mécanique.

## Revendications

1. Bande de connexion pour la fabrication d'au moins un composant électrique à report direct et obtenue à partir d'une feuille métallique (6), le composant devant être constitué d'un élément passif ou actif (1) possédant deux terminaisons électriques (3, 4), l'ensemble étant noyé dans un enrobage protecteur (16), le composant devant comprendre également deux connexions électriques, chacune des connexions comportant une partie située en surface de l'enrobage pour former l'une des électrodes (20, 21) du composant et une partie assurant la liaison électrique avec la terminaison correspondante, deux séries de découpes étant effectuées dans ladite feuille (6) pour réaliser les connexions électriques, soit:
   – une première série de découpes fournissant au moins deux pattes de fixation (7, 8) destinées à être repliées sur les terminaisons électriques (3, 4) pour maintenir en position ledit élément (1) et assurer la liaison électrique,
   – une seconde série de découpes (9) pour former les électrodes (20, 21) du composant après découpe finale et pliage,
au moins l'une des pattes de fixation (7, 8) possède un bossage (11) dont le sommet assure la liaison avec la terminaison électrique correspondante.

2. Bande de connexion selon la revendication 1, caractérisée en ce que lesdites pattes de fixation (7, 8) sont obtenues à partir d'une découpe en forme de H.

3. Bande de connexion selon la revendication 2, caractérisée en ce que la découpe en forme de H est située transversalement par rapport à la feuille (6).

4. Bande de connexion selon l'une quelconque des revendications précédentes, caractérisée en ce qu'au moins l'une des pattes de fixation (7, 8) possède une zone à section réduite.

5. Bande de connexion selon la revendication 4, caractérisée en ce que la section réduite est obtenue par la présence d'un trou (12) percé dans ladite patte.

6. Bande de connexion selon l'une quelconque des revendications 1 à 5, caractérisée en ce que la feuille comprend quatre découpes (9) en forme de L pour délimiter lesdites électrodes, chacune de ces découpes étant située près de l'une des extrémités de la découpe en forme de H de façon à l'encadrer.

7. Bande de connexion selon l'une quelconque des revendications 1 à 6, caractérisée en ce que la feuille est munie de moyens permettant son entraînement.

8. Bande de connexion selon la revendication 7, caractérisée en ce que lesdits moyens sont constitués d'une succession de trous (10) percés suivant au moins l'un des bords latéraux de ladite feuille.

9. Procédé de fabrication d'un composant électrique utilisant une bande de connexion (5) selon l'une quelconque des revendications 1 à 8, caractérisé en ce qu'il comporte les étapes suivantes:
   a) pliage des pattes de fixation (7, 8) de façon à recevoir ledit élément (1),
   b) mise en place des éléments tout en assurant le contact électrique avec les terminaisons correspondantes,
   c) soudage des terminaisons (3, 4) à leurs pattes de fixation,
   d) enrobage des éléments, la bande de connexion (5) servant de plan de joint pour le moulage,
   e) découpe de la bande de connexion pour délimiter chaque composant électrique et les parties destinées à former ses électrodes (20, 21),
   f) pliage et sertissage sur le composant des parties délimitées à l'étape précédente.

## Claims

1. A connection belt for the fabrication of at least one direct transfer electric component, produced starting with a metal foil (6), the component having to be constituted by a passive or active element (1) possessing two electrical terminals (16), the component having also to comprise two electrical connections, each of the connections comprising a part situated in the surface of the coating to form one of the electrodes (20 and 21) of the component and a part ensuring the electrical connections with the corresponding terminal, two series of cuts being effected in the said foil (6) in order to produce the electrical connections, that is to say:
   – a first series of cuts producing at least two fixing lugs (7 and 8) destined to be bent onto the electrical terminals (3 and 4) in order to keep the said element (1) in place and to provide the electrical connections,
   – a second series of cuts (9) in order to form the electrodes (20 and 21)·of the component after the final cutting and bending, at least one of the fixing lugs (7 and 8) possesses a boss (11) whose tip ensures the connection with the corresponding electrical connection.

2. The connection belt as claimed in claim 1, characterized in that the said fixing lugs (7 and 8) are produced starting with a cut in the form of a letter H.

3. The connection belt as claimed in claim 2, characterized in that the cut in the form of a letter H is situated transversely in relation to the foil (6).

4. The connection belt as claimed in any one of the preceding claims, characterized in that the at least one of the fixing lugs (7 and 8) possesses a zone with a reduced section.

5. The connection belt as claimed in claim 4, characterized in that the reduced section is obtained by the presence of a hole (12) made in the said lug.

6. The connection belt as claimed in any one of the claims 1 through 5, characterized in that the said foil has four cuts (9) in the form of a letter L in order to delimit the said electrodes, each of the cuts being situated near to one of the ends of the cut in the form of a letter H in order to form a frame around it.

7. The connection belt as claimed in any one of the claims 1 through 6, characterized in that the foil is provided with means enabling it to be driven.

8. The connection belt as claimed in claim 7, characterized in that the said means are constituted by a succession of holes (10) made along at least one of the lateral edges of the said foil.

5

9. A method for the manufacture of an electrical component using a connection belt (5) as claimed in any one of the claims 1 through 8, characterized in that it comprises the following steps:

(a) being the fixing lugs (7 and 8) in such a manner as to receive the said element (1),

(b) the putting into position of the elements, the fixing lugs retaining the elements while at the same time ensuring electrical contact with the corresponding terminals,

(c) the soldering or welding of the terminals (3 and 4) to their fixing lugs,

(d) the coating of the elements, the connection belt (5) serving as a joint plane for molding,

(e) cutting the connection belt in order to delimit each electrical component and the parts destined to form its electrodes (20 and 21), and

(f) bending and crimping the parts delimited in the preceding stage onto the component.

## Patentansprüche

1. Verbindungsstreifen zur Herstellung von zumindest einem elektrischen Bauteil für direktes Aufsetzen, der aus einer Metallfolie (6) erhalten wird, wobei das Bauteil aus einem passiven oder aktiven (1) Element bestehen soll, das zwei elektrische Anschlußenden (3, 4) besitzt, und die Baugruppe in einer Schutzummantelung (16) versenkt ist, wobei das Bauteil ferner zwei elektrische Anschlüsse umfassen soll und ein jeder der Anschlüsse einen Teil umfaßt, der sich auf der Oberfläche der Ummantelung befindet, um eine der Elektroden (20, 21) des Bauteils und einen Teil zu bilden, der für die elektrische Verbindung mit dem entsprechenden Anschlußende sorgt, wobei zwei Sätze von Aussparungen aus dieser Folie (6) gestanzt werden, um die elektrischen Anschlüsse herzustellen, nämlich:

– einen ersten Satz von Aussparungen (9), der zumindest zwei Befestigungslaschen (7, 8) stellt, die dazu bestimmt sind, an den elektrischen Anschlußenden (3, 4) umgebogen zu werden, um dieses Element (1) in Position zu halten und für die elektrische Verbindung zu sorgen,

– einen zweiten Satz von Aussparungen (9), um die Elektroden (20, 21) des Bauteils nach endgültigem Stanzen und Umbiegen zu bilden.

Zumindest eine der Befestigungslaschen (7, 8) besitzt eine erhabene Stelle (11), deren Spitze für die Verbindung mit dem entsprechenden elektrischen Anschlußende sorgt.

2. Verbindungsstreifen nach Anspruch 1, dadurch gekennzeichnet, daß diese Befestigungslaschen (7, 8) aus einer H-förmigen Aussparung erhalten werden.

3. Verbindungsstreifen nach Anspruch 2, dadurch gekennzeichnet, daß die H-förmige Aussparung quer im Verhältnis zur Folie (6) liegt.

4. Verbindungsstreifen nach einem der vorausgegangenen Ansprüche, dadurch gekennzeichnet, daß zumindest eine der Befestigungslaschen (7, 8) einen Bereich mit reduziertem Querschnitt aufweist.

5. Verbindungsstreifen nach Anspruch 4, dadurch gekennzeichnet, daß der reduzierte Querschnitt durch das Vorhandensein eines in diese Lasche gebohrten Lochs (12) erzielt wird.

6. Verbindungsstreifen nach einem der Ansprüche 1 bis 5, dadurch gekennzeichnet, daß die Folie vier Aussparungen (9) in L-Form umfaßt, um diese Elektroden zu begrenzen, wobei jede dieser Aussparungen in der Nähe eines der Enden der H-förmigen Aussparung liegt, um diese zu umrahmen.

7. Verbindungsstreifen nach einem der Ansprüche 1 bis 6, dadurch gekennzeichnet, daß die Folie mit Mitteln versehen ist, die ihren Weitertransport ermöglichen.

8. Verbindungsstreifen nach Anspruch 7, dadurch gekennzeichnet, daß diese Mittel aus einer Aufeinanderfolge von Löchern (10) bestehen, die zumindest entlang einer der Seitenkanten dieser Folie gebohrt sind.

9. Vorgang zur Herstellung eines elektrischen Bauteils, wo ein Verbindungsstreifen (5) nach einem der Ansprüche 1 bis 8 verwendet wird, dadurch gekennzeichnet, daß er folgende Fertigungsstufen umfaßt:

a) Umbiegen der Befestigungslaschen (7, 8), so daß dieses Element (1) erhalten wird,

b) Einbau der Elemente, wobei die Befestigungslaschen, welche die Elemente halten, für den elektrischen Kontakt mit den entsprechenden Anschlußenden sorgen,

c) Löten der Anschlußenden (3, 4) an ihre Befestigungslaschen,

d) Ummantelung der Elemente, wobei der Verbindungsstreifen (5) als Verbindungsebene für das Formverfahren dient,

e) Ausstanzen des Verbindungsstreifens, um jedes Bauteil und die Teile zu begrenzen, die für die Bildung seiner Elektroden (20, 21) bestimmt sind,

f) Biegen und Quetschen auf dem Bauteil der Teile, die in der vorausgegangenen Stufe abgegrenzt wurden.

EP 0 205 360 B1

FIG_1

FIG_2

FIG_3

FIG_4

FIG_5

FIG_6

FIG_7

FIG_8

FIG_9

EP 0 205 360 B1

# FIG_10

# FIG_11

# FIG_12

FIG_13

FIG_14

EP 0 205 360 B1